# EUROPÄISCHE PATENTSCHRIFT

(11) **EP 3 067 591 B1**
(45) Veröffentlichungstag und Bekanntmachung des Hinweises auf die Patenterteilung: **18.10.2017**
(21) Anmeldenummer: 15158909.0
(22) Anmeldetag: 13.03.2015
(51) Int. Cl.: F16H 63/34

(54) **PARKSPERRENANORDNUNG FÜR EIN KRAFTFAHRZEUGGETRIEBE**
PARKING LOCK ASSEMBLY FOR A MOTOR VEHICLE TRANSMISSION
ENSEMBLE DE VERROUILLAGE DE STATIONNEMENT POUR BOÎTE DE VITESSES DE VÉHICULE AUTOMOBILE

(43) Veröffentlichungstag der Anmeldung: 14.09.2016
(73) Patentinhaber: GETRAG B.V. & Co. KG, 74199 Untergruppenbach (DE)
(72) Erfinder: Dietrich, Frank, 74078 Heilbronn (DE)
(74) Vertreter: Witte, Weller & Partner Patentanwälte mbB

(56) Entgegenhaltungen:
- EP-A2- 1 519 086
- WO-A1-2005/124197
- DE-A1-102012 012 673

## Beschreibung

Die vorliegende Erfindung betrifft eine Parksperrenanordnung für ein Kraftfahrzeuggetriebe, mit einem Parksperrenmechanismus, der zwischen einer Parksperrenstellung zum Immobilisieren eines Kraftfahrzeuges und einer Freigabestellung bewegbar ist, mit einer Betätigungseinrichtung, die dazu ausgebildet ist, mittels eines Betätigungsgliedes den Parksperrenmechanismus von der Parksperrenstellung in die Freigabestellung und/oder von der Freigabestellung in die Parksperrenstellung zu bewegen, wobei das Betätigungsglied zwischen einer Schließstellung und einer Offenstellung bewegbar ist, und mit einer Arretiereinrichtung zum Arretieren des Betätigungsgliedes, wobei die Arretiereinrichtung einen Arretieraktuator aufweist, der in einer Arretierstellung so mit dem Betätigungsglied gekoppelt ist, dass das Betätigungsglied in einer eingenommenen Stellung arretiert ist, wobei der Arretieraktuator über eine Hebelanordnung mit dem Betätigungsglied gekoppelt ist, die einen verschwenkbaren Schwenkhebel aufweist, derart, dass der Arretieraktuator über eine erste Hebellänge au die Hebelanordnung wirkt, wobei das Betätigungsglied über eine zweite Hebellänge auf die Hebelanordnung wirkt, und wobei die erste Hebellänge größer ist als die zweite Hebellänge. Eine solche Parksperranordnung ist aus dem Dokument DE-A1-10 2012 012 673 bekannt.

Automatisierte Antriebsstränge für Kraftfahrzeuge weisen typischerweise eine Parksperrenanordnung auf, die bspw. ein mit einer Getriebeausgangswelle verbundenes Parksperrenrad beinhalten kann, in dessen Verzahnung eine mit dem Gehäuse verbundene Sperrklinke eingreifen kann, um eine Parksperrenstellung einzurichten. Bei klassischen Wandlerautomatikgetrieben können derartige Parksperrenanordnungen manuell betätigt werden, bspw. über den Wählhebel und einen hiermit verbundenen Seilzug oder ein Gestänge. Ferner ist es bei Automatikgetrieben auch bekannt, die Parksperrenanordnung mittels eines Parksperrenaktuators zu betätigen. Eine Betätigung einer Parksperrenanordnung durch einen Parksperrenaktuator wird auch als "park by wire" bezeichnet.

Aus dem Dokument DE 10 2012 016 235 A1 ist dabei eine Aktuatoranordnung bekannt, bei der ein Betätigungsglied einer Betätigungseinrichtung mittels eines hydraulischen Parksperrenaktuators betätigbar ist. Ferner ist das Betätigungsglied mittels einer Arretiereinrichtung in der Offenstellung und/oder in der Schließstellung arretierbar. Ein hierzu verwendeter Arretieraktuator kann einen Elektromagneten beinhalten. Bevorzugt soll es sein, die Arretiereinrichtung in die Arretierposition mechanisch vorzuspannen, bspw. mittels einer Feder. Ferner ist dem hydraulischen Parksperrenaktuator eine Vorspannfeder zugeordnet, mittels der das Betätigungsglied in eine Schließstellung vorgespannt ist.

Aus dem Dokument DE 100 37 565 A1 ist eine Parksperre für ein Kraftfahrzeuggetriebe bekannt, wobei eine Sperreinrichtung durch Betätigung eines Federspeichers in eine Sperrstellung gebracht wird und die Sperreinrichtung über einen Aktuator aus der Sperrstellung gelöst werden kann. Ferner ist eine mechanisch wirkende Verriegelungseinrichtung zum Halten der Sperreinrichtung im nicht-sperrenden Zustand vorgesehen. Ein bestrombarer Elektromagnet dient zum Halten der Verriegelungseinrichtung in der Verriegelungsstellung. Dabei soll die Verriegelungseinrichtung mechanisch durch die Sperreinrichtung beim Lösen deren Sperrstellung betätigt werden und durch den bestromten Elektromagneten in der Verriegelungsstellung gehalten werden. Die Verriegelungseinrichtung weist dabei einen Spreizkonus auf, der Funktionsflächen aufweist, die mit Rastierkugeln in Wirkverbindung stehen.

Aus dem Dokument DE 103 47 667 A1 ist eine weitere Verriegelungseinheit bekannt, bei der ein Rastelement in einer Verriegelungsstellung eine Bewegung eines Kolbens blockiert. Das Rastelement und ein Betätigungselement wirken dabei flächig zusammen. Insbesondere soll ein elastisch radial bewegliches Betätigungselement vorgesehen sein, das rastend an einer Schulter eines Rastelementes angreifen kann, um dieses zu halten. Hierdurch soll die Verwendung von Kugeln als Betätigungselemente vermieden werden.

Es ist ferner bekannt, zum Verriegeln einer Parksperre im ausgelegten Zustand einen Kniehebelmechanismus vorzusehen, der jedoch in der Regel außerhalb eines Getriebegehäuses in einem separaten Modul untergebracht ist. Eine solche Verriegelung kann bei Bedarf elektromagnetisch gelöst werden.

Zum Lösen der Verriegelung mittels eines Elektromagneten können dabei vergleichsweise kleine Elektromagnete vorgesehen werden, da die erforderlichen Kräfte zur Entriegelung relativ gering sind. Allerdings können bei Kniehebeln Probleme hinsichtlich der Toleranzen und hinsichtlich Vibrationen auftreten, insbesondere, wenn ein solcher Kniehebel im Inneren eines Getriebes verbaut würde.

Es ist die Aufgabe der Erfindung, eine verbesserte Parksperrenanordnung anzugeben, die vorzugsweise geringe Betätigungskräfte ermöglicht, vorzugsweise robust ist, vorzugsweise unempfindlich gegenüber Toleranzschwankungen ist, vorzugsweise unempfindlich gegenüber Vibrationen ist und/oder vorzugsweise eine geringe Teileanzahl aufweist.

Die obige Aufgabe wird mit einer Parksperranordnung gemäß Anspruch 1 gelöst. Vorteilhafte Ausgestaltungen der Erfindung ergeben sich aus den abhängigen Ansprüchen.

Der Parksperrenmechanismus kann bspw. ein mit einer Getriebewelle (insbesondere einer Ausgangswelle) drehfest verbundenes Parksperrenrad sowie eine in Bezug auf ein Gehäuse verschwenkbar gelagerte Parksperrenklinke aufweisen. Die Betätigungseinrichtung kann generell ein translatorisch versetzbares Betätigungsglied beinhalten. Dieses kann vorzugsweise translatorisch auf den Parksperrenmechanismus wirken, kann jedoch auch über eine Betätigungs-Hebelanordnung auf den Parksperrenmechanismus wirken, oder auf sonstige Art und Weise. Die Schließstellung des Betätigungsgliedes entspricht dabei der Parksperrenstellung des Parksperrenmechanismus. Die Offenstellung entspricht der Freigabestellung. Das Betätigungsglied kann einteilig aufgebaut sein, kann jedoch auch zweiteilig aufgebaut sein, bspw. mit einer integrierten Einrückfeder, die für den Fall Energie speichert, das beim Betätigen des Parksperrenmechanismus die Parksperrenklinke auf einem Zahn des Parksperrenrades aufliegt.

Die Betätigungseinrichtung kann eine Mechanik beinhalten, um das Betätigungsglied von Hand zu betätigen. Die Mechanik ist dann bspw. mit einem Schalthebel im Innenraum des Fahrzeuges gekoppelt. Vorzugsweise beinhaltet die Betätigungseinrichtung jedoch einen Betätigungsaktuator, mittels dessen das Betätigungsglied versetzbar ist. Das Betätigungsglied ist vorzugsweise in die Schließstellung vorgespannt, insbesondere mittels einer Betätigungsfeder.

Die Arretiereinrichtung dient insbesondere zum Arretieren des Betätigungsgliedes in dessen Offenstellung.

Durch die Kopplung des Arretieraktuators mit dem Betätigungsglied über eine Hebelanordnung mit den genannten Hebellängenverhältnissen wird erreicht, dass der Arretieraktuator gegenüber bekannten Lösungen deutlich geringere Kräfte aufbringen muss, um bspw. aus der Arretierstellung in eine Lösestellung überführt zu werden, bei der die Arretiereinrichtung das Betätigungsglied freigibt.

Im Stand der Technik ist die von dem Arretieraktuator aufzubringende Kraft im Wesentlichen eine Funktion der aneinander liegenden Flächen und der Kraft der Betätigungsfeder, mit der das Betätigungsglied vorgespannt ist. Durch die Hebelanordnung kann diese Kraft dabei insbesondere im Verhältnis der zweiten Hebellänge zu der ersten Hebellänge verringert werden.

Ferner kann die Hebelanordnung mit wenigen Teilen realisiert werden. Die Arretiereinrichtung und die Hebelanordnung können mechanisch robust und unempfindlich gegenüber Toleranzschwankungen sowie unempfindlich gegenüber Vibrationen ausgeführt werden. Die Hebelanordnung kann im Inneren eines Getriebegehäuses realisiert werden. Ein Hebel der Hebelanordnung kann insbesondere in Bezug auf das Gehäuse verschwenkbar ausgebildet sein. Eine Hebelachse eines Hebels der Hebelanordnung ist vorzugsweise windschief zu einer Betätigungsachse des Betätigungsgliedes ausgerichtet. Die Hebelachse ist vorzugsweise quer, insbesondere senkrecht zu der Betätigungsachse ausgerichtet.

Durch die Tatsache, dass zum Versetzen des Arretieraktuators von der Arretierstellung in eine Lösestellung und/oder umgekehrt nur geringe Kräfte aufzubringen sind, kann der Arretieraktuator klein dimensioniert werden, bspw. durch einen kleinbauenden Elektromagnet.

Gemäß einer besonders bevorzugten Ausführungsform ist die Arretiereinrichtung so ausgebildet, dass das Betätigungsglied ohne Energiezufuhr in der eingenommenen Stellung arretiert ist. Mit anderen Worten kann der Parksperrenmechanismus auch ohne Energiezufuhr über den Arretieraktuator in der Freigabestellung gehalten werden. Falls daher bspw. ein Betätigungsaktuator für das Betätigungsglied ausfällt, mittels dessen das Betätigungsglied in die Offenstellung (entsprechend der Freigabestellung des Parksperrenmechanismus) bewegt wird, wird der Parksperrenmechanismus in der Freigabestellung gehalten. Die Arretiereinrichtung arretiert auch ohne Energiezufuhr in der eingenommenen Stellung das Betätigungsglied, und zwar vorzugsweise in der Offenstellung. Hierdurch kann ein Sperren des Parksperrenmechanismus bspw. für den Fall verhindert werden, dass bei der Stellung eines Wählhebels "N" in einer Waschstraße bei Abschalten des Kraftfahrzeugmotors ein Hydraulikdruck für einen Betätigungsaktuator zusammenbricht. Ohne eine solche Arretiereinrichtung würde in diesem Fall die Parksperre einfallen, was zu an sich bekannten Problemen in einer Waschstraße führen kann, bei der ein Kraftfahrzeug rollend geführt und transportiert wird.

Gemäß der Erfindung weist die Hebelanordnung einen verschwenkbaren Schwenkhebel auf, mit dem der Arretieraktuator und das Betätigungsglied gekoppelt sind.

Der Schwenkhebel ist vorzugsweise um eine gehäusefeste Achse verschwenkbar. Der Schwenkhebel kann bspw. innerhalb eines Bereiches von 0° bis 45° verschwenkbar sein. Dieser Bereich kann jedoch auch deutlich kleiner sein.

Der Schwenkhebel kann ein einarmiger Hebel sein. In diesem Fall ist es bevorzugt, wenn der Arretieraktuator an einem Punkt entfernter von einer Schwenkachse an dem Schwenkhebel angreift als das Betätigungsglied.

Von besonderem Vorzug ist es jedoch, wenn der Schwenkhebel ein zweiarmiger Hebel ist, wobei der Arretieraktuator mit einem ersten Schwenkhebelarm gekoppelt ist und wobei das Betätigungsglied mit einem zweiten Schwenkhebelarm gekoppelt ist.

Bei dieser Ausführungsform ist es vergleichsweise einfach möglich, die erste und die zweite Hebellänge deutlich unterschiedlich zu machen, bspw. in einem Verhältnis von 1,5:1 bis 25:1, insbesondere von 2:1 bis 20:1, und besonders bevorzugt von 3:1 bis 15:1 oder sogar 8:1 bis 12:1.

Folglich ist es möglich, die von dem Arretieraktuator aufzubringende Kraft deutlich zu verringern, und zwar in dem Bereich der oben genannten Verhältnisse.

Generell ist es denkbar, dass der Arretieraktuator und/oder das Betätigungsglied über gelenkige Verbindungen mit dem Schwenkhebel verbunden sind.

Von besonderem Vorzug ist es jedoch, wenn der Schwenkhebel wenigstens eine Funktionskontur aufweist, an der der Arretieraktuator und/oder das Betätigungsglied angreift.

Eine solche Funktionskontur kann dabei insbesondere an einem Außenumfang des Schwenkhebels ausgebildet sein. Es kann hierbei eine spezielle Funktionskontur für den Arretieraktuator vorgesehen sein, und eine spezielle Funktionskontur für das Betätigungsglied.

Der Schwenkhebel kann dabei nach der Art eines Nockens wirken, an dessen Außenumfang Abschnitte des Arretieraktuators und/oder des Betätigungsgliedes angreifen.

Von besonderem Vorzug ist es, wenn der Schwenkhebel zwischen einer Schwenkhebel-Arretierposition und einer Schwenkhebel-Freigabeposition verschwenkbar ist, wobei der Schwenkhebel eine Arretierkontur für das Betätigungsglied aufweist, die in der Schwenkhebel-Arretierposition so ausgerichtet ist, dass das Betätigungsglied in der eingenommenen Stellung an der Arretierkontur formschlüssig gehalten ist.

Die Arretierkontur für das Betätigungsglied ist in der Schwenkhebel-Arretierposition vorzugsweise quer zu der Betätigungsachse ausgerichtet ist. Die Arretierkontur ist in der Schwenkhebel-Arretierposition vorzugsweise im Wesentlichen senkrecht zu der Betätigungsachse ausgerichtet, so dass ein Betätigungsglied (direkt oder über einen Betätigungsgliedhebel) daran angreifen kann, ohne dass das Betätigungsglied in die Schließstellung bewegt werden kann (durch Formschluss). Wenn der Schwenkhebel in die Schwenkhebel-Freigabeposition verschwenkt ist, ist diese Arretierkontur vorzugsweise geneigt zu der Betätigungsachse ausgerichtet, vorzugsweise unter einem Winkel < 90°, insbesondere in einem Winkelbereich von bspw. 45° bis 88°, insbesondere in einem Bereich von 70° bis 87°. Aufgrund der Schrägstellung der Arretierkontur in der Schwenkhebel-Freigabestellung kann bspw. ein Betätigungsgliedhebel an dieser Kontur entlanggleiten, und zwar aufgrund der Vorspannkraft einer Betätigungsfeder und vorzugsweise gegen eine Kraft einer Feder, die den Betätigungsgliedhebel in die Arretierposition vorspannt. Die Betätigungsfeder und die Feder, die den Betätigungsgliedhebel vorspannt, sind für diesen Fall entsprechend anzupassen, derart, dass sichergestellt ist, dass in der Schwenkhebel-Freigabeposition das Betätigungsglied aufgrund der Betätigungsfeder in die Schließstellung versetzt wird.

Gemäß einer weiteren bevorzugten Ausführungsform ist der Schwenkhebel zwischen einer Schwenkhebel-Arretierposition und einer Schwenkhebel-Freigabeposition verschwenkbar, wobei der Schwenkhebel eine Haltekontur für den Arretieraktuator aufweist, die in der Schwenkhebel-Arretierposition so ausgerichtet ist, dass der Arretieraktuator den Schwenkhebel gegenüber einer Verdrehung in die Schwenkhebel-Freigabeposition formschlüssig halten kann.

Der Arretieraktuator, und zwar insbesondere ein verschiebliches Arretieraktuatorglied des Arretieraktuators, bildet folglich eine Art Gegenlager, um den Schwenkhebel in der Schwenkhebel-Arretierposition zu halten, obgleich das Betätigungsglied, bspw. über die Arretierkontur, an dem Schwenkhebel angreift, um diesen zu verschwenken. Das Arretieraktuatorglied kann im Bereich dieses Gegenlagers dann aufgrund der nur geringen aufzunehmenden Kräfte (wegen der Hebelanordnung) aus einem kostengünstigen und leichten Material hergestellt werden, bspw. aus einem Leichtmetall oder sogar aus einem Kunststoff. Insbesondere zur Optimierung der Reibverhältnisse ist als Material für Schwenkhebel und Gegenlager jedoch ein härtbarer Stahl bevorzugt.

Der Schwenkhebel selbst ist vorzugsweise aus einem Metall hergestellt.

Sofern der Arretieraktuator dazu angesteuert wird, den Schwenkhebel freizugeben, wird dieser durch die Kraft der Betätigungsfeder und das Einwirken des Betätigungsgliedes verschwenkt. Das Zusammenwirken zwischen Schwenkhebel und Betätigungsglied ist vorzugsweise so, dass der Schwenkhebel bei Erreichen der Schließstellung des Betätigungsgliedes wieder seine Schwenkhebel-Arretierposition einnehmen kann. Dies kann entweder dadurch erreicht werden, dass der Schwenkhebel in die Schwenkhebel-Arretierposition mechanisch vorgespannt ist, bspw. mittels einer Feder wie einer Drehfeder. Alternativ ist es denkbar, dass der Schwenkhebel so mit einem Arretieraktuatorglied zusammenwirkt, dass der Schwenkhebel bei einem Zurückversetzen des Arretieraktuators aus der Lösestellung in die Arretierstellung den Schwenkhebel wieder in die Schwenkhebel-Arretierposition zurückführt. Zu diesem Zweck kann an dem Arretieraktuatorglied bpsw. eine geeignete Rampenkontur ausgebildet sein.

Gemäß der Erfindung weist die Hebelanordnung zusätzlich zu dem Schwenkhebel einen Betätigungsgliedhebel auf, der zwischen einer ersten Betätigungsgliedhebel-Position und einer zweiten Betätigungsgliedhebel-Position verschwenkbar an dem Betätigungsglied gelagert ist, wobei der Betätigungsgliedhebel in der ersten Betätigungsgliedhebel-Position an einem Arretierglied angreift.

Das Arretierglied kann hierbei ein gehäusefestes Arretierglied sein. Das Arretierglied kann auch von einem Arretieraktuatorglied des Arretieraktuators gebildet sein. Das Arretierglied ist jedoch insbesondere ein Schwenkhebel der oben beschriebenen Art.

Bei Lagerung eines Betätigungsgliedhebels an dem Betätigungsglied wird ebenfalls eine konstruktiv günstige Lösung erreicht. Der Betätigungsgliedhebel ist vorzugsweise in Richtung hin zu dem Arretierglied vorgespannt. Der Betätigungsgliedhebel weist insbesondere einen Haken auf, der rasthakenartig an dem Arretierglied angreifen kann. Der Haken erstreckt sich dabei vorzugsweise in einer Richtung quer zu der Betätigungsachse des Betätigungsgliedes. Die Achse, um die der Betätigungsgliedhebel an dem Betätigungsglied verschwenkbar gelagert ist, ist vorzugsweise windschief zu der Betätigungsachse, insbesondere senkrecht hierzu ausgerichtet.

Gemäß einer weiteren insgesamt bevorzugten Ausführungsform weist der Arretieraktuator eine Arretieraktuatorachse auf, die unter einem Winkel kleiner als 90° in Bezug auf eine Betätigungsachse ausgerichtet ist, entlang der das Betätigungsglied zwischen der Schließstellung und der Offenstellung bewegbar ist.

Die Arretieraktuatorachse ist dabei insbesondere parallel versetzt zu der Betätigungsachse ausgerichtet. Hierdurch kann sowohl in axialer Richtung als auch in radialer Richtung eine kompakte Bauweise realisiert werden.

Die Arretieraktuatorachse ist vorzugsweise parallel zu der Betätigungsachse ausgerichtet, und ist vorzugsweise windschief zu einer Schwenkhebelachse ausgerichtet, insbesondere senkrecht hierzu.

Ein Arretieraktuatorglied, das mittels des Arretieraktuators entlang der Arretieraktuatorachse bewegbar ist, ist vorzugsweise in Richtung der Arretierstellung vorgespannt. Der Arretieraktuator ist vorzugsweise mit Energie zu versorgen, um das Arretieraktuatorglied in die Lösestellung zu versetzen.

Das Betätigungsglied ist, wie oben erwähnt, vorzugsweise mittels eines Parksperrenaktuators bzw. Betätigungsaktuators bewegbar, wobei dieser Aktuator vorzugsweise als Hydraulikaktuator ausgebildet ist. Er kann jedoch auch als elektromotorischer oder elektromagnetischer Aktuator ausgebildet sein.

Der Arretieraktuator ist vorzugsweise ein elektromagnetischer Aktuator. Er kann jedoch auch ein hydraulischer oder ein elektromotorischer Aktuator sein.

Wenn das Betätigungsglied mittels eines hydraulischen Parksperrenaktuators bewegbar ist und der Arretieraktuator mittels eines elektromagnetischen Aktuators bewegbar ist, kann eine Redundanzfunktion dadurch eingerichtet werden, dass das Arretieraktuatorglied alternativ auch hydraulisch bewegbar ist, bspw. mittels eines zusätzlich vorgesehenen Arretieraktuator-Hydraulikzylinders. Bei Ausfall des elektromagnetischen Arretieraktuator wäre es dann trotzdem möglich, die Verriegelung der Parksperre zu lösen.

Der Arretieraktuator kann zum Versetzen des Arretieraktuatorgliedes aus der Arretierstellung in die Lösestellung entweder drückend wirken, kann jedoch auch als ziehender Elektromagnet ausgebildet sein.

Insgesamt kann eine Parksperrenanordnung realisiert werden, die vorzugsweise eine elektromagnetische Haltefunktion bzw. Arretierfunktion beinhaltet. Diese Funktion ist vorzugsweise innerhalb eines Getriebegehäuses aufgenommen. Es ergeben sich nur geringe Toleranz- und Vibrationsempfindlichkeiten bei einem Verbau innerhalb des Getriebegehäuses. Zudem sind vorzugsweise nur geringe Betätigungskräfte erforderlich.

Insbesondere kann der Parksperrenmechanismus auch bei Abfall eines Hydraulikdruckes in manchen Ausführungsformen energielos im ausgelegten Zustand gehalten werden. Vorzugsweise ist ein Schwenkhebel drehbar gelagert und wird elektromagnetisch betätigt oder gelöst. Ferner kann vorgesehen sein, dass Betätigungskräfte durch Nutzung von Hebelkräften verringert werden. Eine Verringerung von Betätigungskräften ergibt sich vorzugsweise durch eine Gleitkontur (Haltekontur) des Schwenkhebels, die bspw. an einem Gegenlager in Form eines Arretieraktuatorgliedes angreifen kann. Eine Haltefunktion bzw. Arretierfunktion eines solchen Schwenkhebels kann sich vorzugsweise durch eine Sperrkontur des Schwenkhebels ergeben, die insbesondere als Arretierkontur für ein Betätigungsglied ausgebildet sein kann. Insbesondere können zum Lösen einer Arretierung erforderliche Betätigungskräfte erheblich reduziert werden, so dass kleinbauende Arretieraktuatoren verwendbar sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, die durch die nachfolgenden Ansprüche definiert wird.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer schematisch dargestellten Ausführungsform einer nicht zur Erfindung gehörenden Parksperrenanordnung;
- Fig. 2: eine schematische Darstellung einer weiteren Ausführungsform einer nicht zur Erfindung gehörenden Parksperrenanordnung;
- Fig. 3: eine schematische Darstellung einer Ausführungsform einer erfindungsgemäßen Parksperrenanordnung;
- Fig. 4: eine Draufsicht auf eine weitere Ausführungsform einer erfindungsgemäßen Parksperrenanordnung;
- Fig. 5: eine erste perspektivische Ansicht der Parksperrenanordnung der Fig. 4;
- Fig. 6: eine weitere perspektivische Ansicht der Parksperrenanordnung der Fig. 4;
- Fig. 7: eine Schnittansicht entlang der Linie VII-VII der Fig. 4;
- Fig. 8: eine schematische Darstellung der Parksperrenanordnung der Figuren 4 bis 7 bei einem ausgelenkten Betätigunghebel; und
- Fig. 9: eine der Fig. 8 vergleichbare Darstellung mit dem Betätigungsgliedhebel in der Schließstellung.

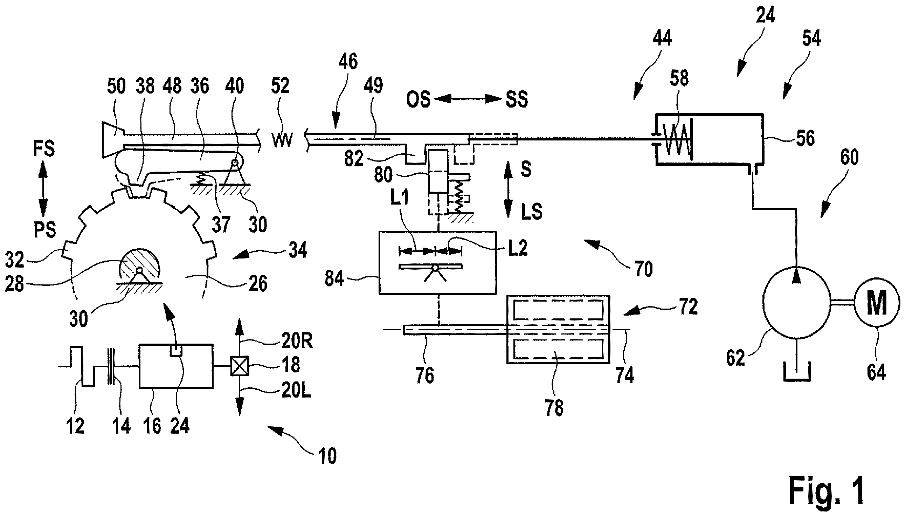

In Fig. 1 ist in schematischer Form ein Antriebsstrang für ein Kraftfahrzeug dargestellt und generell mit 10 bezeichnet. Der Antriebsstrang 10 beinhaltet einen Antriebsmotor 12 wie einen Verbrennungsmotor oder eine Hybrid-Antriebseinheit oder dergleichen. Ferner weist der Antriebsstrang eine Kupplungsanordnung 14 mit einer Einfachkupplung oder einer Doppelkupplung auf. Der Antriebsstrang 10 beinhaltet ferner eine Getriebeanordnung 16, bspw. in Form eines automatisierten Schaltgetriebes, eines Doppelkupplungsgetriebes oder eines Wandler-Automatikgetriebes. Im letzteren Fall kann die Kupplungsanordnung 14 in die Getriebeanordnung 16 integriert sein. Ein Ausgang der Getriebeanordnung 16 ist mit einem Differential 18 verbunden, mittels dessen Antriebsleistung auf angetriebene Räder 20L, 20R verteilbar ist.

Der Getriebeanordnung 16 ist eine Parksperrenanordnung 24 zugeordnet. Die Parksperrenanordnung 24 ist vorzugsweise vollständig innerhalb des Getriebegehäuses aufgbenommen und weist ein Parksperrenrad 26 auf, das mit einer Getriebewelle 28 drehfest verbunden ist, die vorzugsweise direkt mit dem Abtrieb verbunden ist, wie bspw. eine Getriebeausgangswelle, oder auch eine Eingangswelle des Differentials 18. Die Getriebewelle 28 ist in Bezug auf ein Gehäuse 30 drehbar gelagert. Das Parksperrenrad 26 weist außenumfänglich eine Parksperrenverzahnung 32 auf und bildet gemeinsam mit einer Parksperrenklinke 36 einen Parksperrenmechanismus 34. Die Parksperrenklinke 36 ist in Richtung weg von dem Parksperrenrad 26 mittels einer Klinkenfeder 37 vorgespannt und weist einen Klinkenzahn 38 auf. Die Parksperrenklinke 36 ist um eine Klinkenachse 40 verschwenkbar gelagert, die bspw. parallel zu der Getriebewelle 28 ausgerichtet sein kann. Der Parksperrenmechanismus 34 ist zwischen einer Freigabestellung FS und einer Parksperrenstellung PS bewegbar. In der Freigabestellung FS gibt die Parksperrenklinke 36 das Parksperrenrad 26 frei, so dass die Getriebewelle 28 frei drehen kann. In der Parksperrenstellung PS greift der Klinkenzahn 38 der Parksperrenklinke 36 in eine Zahnlücke der Parksperrenverzahnung 32, so dass die Getriebewelle 28 blockiert ist und ein Kraftfahrzeug, das mit dem Antriebsstrang 10 ausgestattet ist, immobilisiert ist.

Zum Bewegen des Parksperrenmechanismus 34 von der Freigabestellung FS in die Parksperrenstellung PS ist eine Betätigungseinrichtung 44 vorgesehen. Die Betätigungseinrichtung 44 weist ein Betätigungsglied 46 auf, das vorliegend in Form einer Betätigungsstange 48 ausgebildet ist, die entlang einer Betätigungsachse 49 bewegbar ist. An dem Betätigungsglied 46 kann bspw. ein Ziehkeil 50 ausgebildet sein, der bei einer Bewegung des Betätigungsgliedes von einer in Fig. 1 in durchgezogenen Linien gezeigten Offenstellung OS in eine Schließstellung SS auf einen Rücken der Parksperrenklinke 36 drückt, um diese von der Freigabestellung FS in die Parksperrenstellung PS zu drücken. Die Offenstellung OS entspricht folglich der Freigabestellung FS. Die Schließstellung SS des Betätigungsgliedes entspricht der Parksperrenstellung PS. Das Betätigungsglied 46 kann einteilig ausgebildet sein, kann jedoch auch zweiteilig ausgebildet sein, wobei die zwei Teile durch eine Einrückfeder 52 miteinander gekoppelt sind. Sofern das Betätigungsglied 46 in die Schließstellung SS bewegt wird und sich hierbei der Klinkenzahn 38 auf einem Zahn der Parksperrenverzahnung 32 befindet, wird die Einrückfeder 52 gespannt, so dass sie bei einem Verdrehen des Parksperrenrades 26 dafür sorgt, dass die Parksperrenklinke in die Parksperrenstellung PS versetzt wird.

Das Betätigungsglied 46 ist mittels eines Betätigungsaktuators 54 betätigbar. Die Parksperrenanordnung 24 arbeitet folglich nach dem Prinzip "park by wire". Der Betätigungsaktuator 54 ist vorliegend als hydraulischer Aktuator ausgebildet und beinhaltet einen Betätigungszylinder 56, innerhalb dessen ein Betätigungskolben 57 versetzbar ist. Der Betätigungskolben 57 ist mit dem Betätigungsglied 46 gekoppelt. Das Betätigungsglied 46 ist mittels einer Betätigungsfeder 58 in die Schließstellung SS vorgespannt. Die Betätigungsfeder 58 kann bspw. in den Betätigungszylinder 56 integriert sein, wie in Fig. 1 dargestellt.

Der Betätigungszylinder 56 ist mit einer Druckquelle 60 verbunden, die nach Bedarf den insbesondere als einfach wirkenden Zylinder ausgebildeten Betätigungszylinder 56 gegen die Kraft der Betätigungsfeder 58 befüllen kann, um das Betätigungsglied 46 aus der Schließstellung SS in die Offenstellung OS zu bewegen. Die Druckquelle 60 kann eine Hydraulikpumpe 62 beinhalten, die bspw. über einen Nebenantrieb angetrieben wird, oder aber, wie in Fig. 1 dargestellt, von einem Elektromotor 64. Details zu einer derartigen Druckquelle sind offenbart in dem Dokument DE 10 2012 016 235 A1, auf dessen Inhalt vorliegend vollumfänglich Bezug genommen wird.

Sofern die Druckquelle 60 nicht dazu verwendet wird, um den Betätigungszylinder 56 zu füllen, wird das Betätigungsglied 46 mittels der Betätigungsfeder 58 in die Schließstellung SS bewegt, so dass der Parksperrenmechanismus 34 in die Parksperrenstellung PS bewegt wird. Dies kann insbesondere dann nachteilig sein, wenn bspw. ein Fahrzeug, das rollend in einer Waschstraße befördert wird, bei Stellung N eines Wählhebels für die Getriebeanordnung 16, das Fahrzeug abgeschaltet wird, so dass kein Hydraulikdruck mehr bereitgestellt werden kann. In diesem Fall würde der Parksperrenmechanismus in die Parksperrenstellung PS bewegt werden, was in einer solchen Waschstraße nicht erwünscht ist.

Die Parksperrenanordnung 24 beinhaltet zu diesem Zweck eine Arretiereinrichtung 70. Die Arretiereinrichtung 70 weist einen Arretieraktuator 72 auf, der dazu ausgebildet ist, ein Arretieraktuatorglied 76 entlang einer Arretieraktuatorachse 74 zu bewegen. Der Arretieraktuator 72 beinhaltet zu diesem Zweck vorzugsweise einen Elektromagneten 78.

Die Arretiereinrichtung 70 beinhaltet ferner ein Arretierglied 80, das zwischen einer Arretierstellung AS und einer Lösestellung LS bewegbar ist, und zwar mittels des Arretieraktuators 72. In der Arretierstellung AS greift ein Arretieranschlag 82 des Betätigungsgliedes 46 an dem Arretierglied 80 an, so dass das Betätigungsglied 46 nicht von der Offenstellung OS in die Schließstellung SS bewegt werden kann. Das Arretierglied 80 kann, wie dargestellt, mittels einer nicht näher bezeichneten Feder in die Arretierstellung AS vorgespannt sein. Folglich kann das Betätigungsglied 46 ohne Energiezufuhr in der Offenstellung OS gehalten bzw. arretiert werden, also auch dann, wenn von Seiten des Kraftfahrzeuges keine Energiezufuhr zu der Parksperrenanordnung mehr erfolgt (weder Hydraulikdruck noch elektrische Energie).

Das Arretierglied 80 kann im normalen Fahrbetrieb des Kraftfahrzeuges ebenfalls in der Arretierstellung AS sein, um den Parksperrenmechanismus 34 in der Freigabestellung FS zu halten, ohne dass es notwendig ist, über die Druckquelle 60 ständig Fluid unter Druck dem Betätigungsaktuator 54 bereitzustellen. Es ist jedoch möglich, dass für diesen Fall noch eine weitere ergänzende bzw. redundante Möglichkeit des Haltens des Parksperrenmechanismus 34 in der Freigabestellung FS vorhanden ist, wobei eine derartige redundante Funktion bspw. in den Parksperrenmechanismus 34 selbst integriert sein kann.

Wenn das Arretierglied 80 in die Lösestellung LS zu versetzen ist, um den Parksperrenmechanismus 34 mittels der Betätigungsfeder 58 in die Parksperrenstellung PS zu versetzen, ist im Stand der Technik eine relativ hohe Kraft aufzubringen, da zwischen dem Arretieranschlag 82 und dem Arretierglied 80 aufgrund der Vorspannung der Betätigungsfeder 58 eine hohe Reibkraft entsteht. Im Stand der Technik muss daher zum sicheren Überführen des Arretiergliedes 80 in die Lösestellung LS ein relativ großer Arretieraktuator 72 vorgesehen werden.

Vorliegend ist jedoch der Arretieraktuator 72 über eine Hebelanordnung 84 mit dem Arretierglied 80 und folglich mit dem Betätigungsglied 46 gekoppelt, derart, dass der Arretieraktuator 72 über eine erste Hebellänge L1 auf die Hebelanordnung 84 wirkt, wobei das Betätigungsglied 46 mittels des Arretiergliedes 80 über eine zweite Hebellänge L2 auf die Hebelanordnung 84 wirkt. Die erste Hebellänge L1 ist größer als die zweite Hebellänge L2. Folglich kann das Arretierglied 80 aus der Arretierstellung AS in die Lösestellung LS mit einer Kraft des Arretieraktuators 72 bewegt werden, die nach dem Hebelgesetz mit dem Faktor L2:L1 zu multiplizieren ist, also kleiner ist, als wenn das Arretieraktuatorglied 76 direkt mit dem Arretierglied 80 gekoppelt wäre.

Folglich kann der Arretieraktuator 72 klein dimensioniert werden und folglich kompakt bauen, was auch zu günstigeren Kosten des Antriebsstranges 10 führt.

In den nachfolgenden Figuren sind weitere Ausführungsformen von Parksperrenanordnungen gezeigt, die hinsichtlich Aufbau und Funktionsweise generell der Parksperrenanordnung 24 der Fig. 1 entsprechen. Gleiche Elemente sind daher durch gleiche Bezugszeichen gekennzeichnet. Im Folgenden werden im Wesentlichen die Unterscheide erläutert.

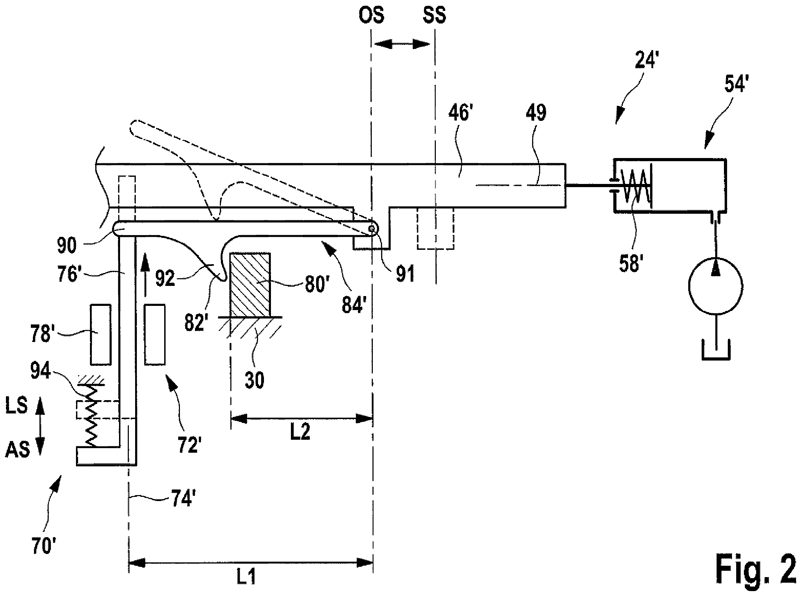

Fig. 2 zeigt eine allgemein bekannte Parksperrenanordnung 24', bei der an einem Betätigungsglied 46' ein Betätigungsgliedhebel 90 verschenkbar gelagert ist, und zwar um eine Betätigungsgliedhebelachse 91, die quer, insbesondere senkrecht verläuft zu der Betätigungsachse des Betätigungsgliedes 46'.

An dem Betätigungsgliedhebel 90 ist eine sich quer zu der Betätigungsachse 49 erstreckende Rastnase 92 ausgebildet. In der in Fig. 2 in durchgezogenen Linien gezeigten Offenstellung OS des Betätigungsgliedes 46 hintergreift die Rastnase 92 ein Arretierglied 80', das eine sich quer zu der Betätigungsglied 46' erstreckende Arretierfläche aufweist und vorliegend starr mit dem Gehäuse 30 verbunden ist. Ein Abstand zwischen einem Eingriffspunkt der Rastnase 92 und des Arretiergliedes 80' und der der Betätigungsgliedhebelachse 91 ist mit L2 bezeichnet.

Ferner greift ein Arretieraktuatorglied 76', das in Fig. 2 in der Arretierstellung AS gezeigt ist, nach Bedarf mittels eines Arretieraktuators 72' an dem Betätigungsgliedhebel an, um diesen aus der in Fig. 2 in durchgezogenen Linien gezeigten Arretierstellung in eine Lösestellung zu bewegen, bei der die Betätigungsfeder 58' das Betätigungsglied 46 in die Schließstellung SS bewegen kann, die in Fig. 2 gestrichelt dargestellt ist. Das Arretieraktuatorglied 76' ist mittels einer Arretieraktuatorfeder 94 in die Arretierstellung AS vorgespannt. Bei Bestromen eines Elektromagneten 78' des Arretieraktuators 72' drückt das Arretieraktuatorglied 76' auf den Betätigungsgliedhebel 90, und zwar in einem Abstand L1 von der Betätigungsgliedhebelachse 91 und gegen eine Betätigungsgliedhebelfeder 96. Auch hier ist der Hebelarm L1 größer als L2, so dass sich die oben beschriebenen Vorteile ergeben. Die Hebelanordnung 84' beinhaltet vorliegend folglich nur einen einarmigen Hebel in Form des Betätigungsgliedhebels 90.

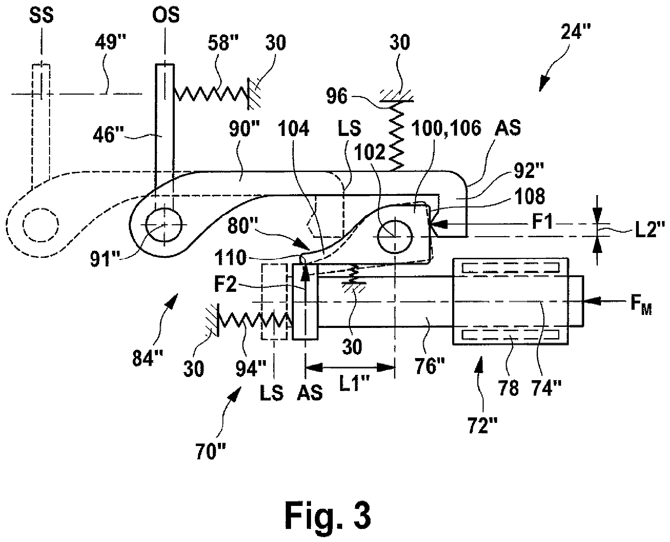

In Fig. 3 ist eine Ausführungsform einer erfindungsgemäßen Parksperrenanordnung 24" gezeigt.

Die Parksperrenanordnung 24" weist eine Arretiereinrichtung 70" auf, die als Arretierglied 80" einen Schwenkhebel 100 beinhaltet. Der Schwenkhebel 100 ist um eine Schwenkhebelachse 102 verdrehbar gelagert, die windschief und senkrecht verläuft zu der Betätigungsachse 49". Der Arretieraktuator 72" weist eine Arretieraktuatorachse 74" auf, die vorliegend parallel ausgerichtet ist zu der Betätigungsachse 49", und zwar parallel versetzt hierzu, jedoch auch senkrecht hierzu ausgerichtet sein könnte.

Der Schwenkhebel 100 weist einen ersten Schwenkhebelarm 104 und einen zweiten Schwenkhebelarm 106 auf und ist als zweiarmiger bzw. zweiseitiger Hebel ausgebildet. An dem zweiten Schwenkhebelarm 106 ist eine Arretierkontur 108 ausgebildet. An dem ersten Schwenkhebelarm 104 ist eine Haltekontur 110 ausgebildet. Die Arretierkontur 108 und die Haltekontur 110 sind vorliegend unter einem Winkel von etwa 90° zueinander ausgerichtet, könnten jedoch auch parallel zueinander ausgerichtet sein.

Das Arretieraktuatorglied 76" ist mittels einer Arretieraktuatorfeder 94" in die Arretierstellung AS vorgespannt. In der Arretierstellung AS bildet das Arretieraktuatorglied 76" ein Gegenlager, an dem die Haltekontur 110 des Schwenkhebels 100 anliegt, derart, dass der Schwenkhebel nicht in Richtung auf das Arretieraktuatorglied 76" bewegt werden kann (in Fig. 3 also nicht entgegen der Uhrzeigerrichtung verschwenkt werden kann).

Wenn der Arretieraktuator 72" angesteuert wird und das Arretieraktuatorglied 76" in die Lösestellung LS bewegt wird, kann der Schwenkhebel 100 in eine Lösestellung verschwenkt werden, die in Fig. 3 gestrichelt dargestellt ist und gegenüber der in durchgezogenen Linien gezeigten Arretierstellung des Schwenkhebels um vorzugsweise weniger als 45°, insbesondere weniger als 25° versetzt ist.

An dem Betätigungsglied 46" ist ein Betätigungsgliedhebel 90" um eine Betätigungsgliedhebelachse 91" verschwenkbar gelagert. In der in Fig. 3 in durchgezogenen Linien gezeigten Schwenkhebel-Arretierposition greift eine Rastnase 92" des Betätigungsgliedhebels 90" an der Arretierkontur 108 an.

Ein Abstand entsprechend einer zweiten Hebellänge L2" ist gebildet zwischen der Schwenkhebelachse 102 und jenem Punkt, an dem der Betätigungsgliedhebel 90" an der Arretierkontur 108 angreift. Dieser Punkt ist in Fig. 3 auch durch einen Kraftpfeil F1 gezeigt, der die Kraft der Betätigungsfeder 58" darstellt.

Wenn sich das Arretieraktuatorglied 76" in der Arretierstellung AS befindet, wozu keine Energiezufuhr notwendig ist, kann die Kraft F1 den Schwenkhebel 100 nicht verschwenken, da die Haltekontur 110 formschlüssig an dem Arretieraktuatorglied 76" anliegt.

Der Angriffspunkt zwischen der Haltekontur 110 und dem Arretieraktuatorglied 76" in der Arretierstellung AS und der Schwenkhebelachse 102 ist in Fig. 3 mit L1" dargestellt. L1" ist wenigstens doppelt so lang wie L2", insbesondere wenigstens dreimal so lang wie L2".

Um das Arretieraktuatorglied 76" aus der Arretierstellung AS in die Lösestellung LS zu bewegen, ist von dem Elektromagneten 78 eine Kraft F_{M} aufzubringen, die signifkant kleiner ist als die Kraft F1 der Betätigungsfeder 58", insbesondere wenigstens 50 % kleiner, insbesondere wenigstens 75 % kleiner und vorzugsweise insbesondere 85 % kleiner als die Kraft F1. Dieses resultiert daraus, dass zu dieser Bewegung zwischen der Haltekontur 110 und dem Arretieraktuatorglied 76" eine Reibkraft zu überwinden ist, die sich aus einer Normalkraft ergibt, die in Fig. 3 schematisch mit F2 dargestellt ist. Die Normalkraft F2 wirkt im Kräftegleichgewicht vom Arretieraktuatorglied 76" auf den Schwenkhebel 100, um diesen gegen das Drehmoment abzustützen, das aufgrund der Kraft F1 auf den Schwenkhebel 100 einwirkt. Die durch den Elektromagneten 78 (Aktuator) zu überwindende Summe der Reibkräfte ergibt sich aus der Normalkraft F2 in weiteren Rechenschritten. Idealerweise, insbesondere bei einem Reibkoeffizienten von deutlich kleiner als 1, sind die zu überwindenden Reibkräfte kleiner als die Normalkraft F2.

Folglich kann das Arretieraktuatorglied 76" mit einer sehr geringen Kraft F_{M} in die Lösestellung LS bewegt werden.

Bei Erreichen der Lösestellung kann der Schwenkhebel 100 aufgrund der Kraft F1 verschwenken, bspw. bis er innerhalb des oben genannten Winkelbereiches an einen Anschlag gerät. Hierdurch wird die Arretierkontur 108 geneigt, so dass die Rastnase 92" des Betätigungsgliedes 46" an der Arretierkontur 108 entlanggleiten kann, wobei der Betätigungsgliedhebel 90" verschwenkt wird, und zwar in der Darstellung der Fig. 3 nach oben. Dies erfolgt gegen die Kraft der Betätigungsgliedhebelfeder 96.

Zu einem bestimmten Zeitpunkt löst sich die Rastnase 92" von der Arretierkontur 108, so dass das Betätigungsglied 46" entlang der Betätigungsachse 49" aus der in Fig. 3 in durchgezogenen Linien gezeigten Offenstellung OS in die Schließstellung SS bewegt werden kann, um den Parksperrenmechanismus in die Parksperrenstellung PS zu bewegen. Der Betätigungsgliedhebel 90" kann dann auf einer Rückseite (der Haltekontur 110 gegenüberliegenden Seite) des ersten Schwenkhebelarms 104 wieder in die Ausgangswinkellage zurückgleiten, und zwar für mittels der Betätigungsgliedhebelfeder 96. Der Schwenkhebel 100 kann bspw. mittels einer nicht näher bezeichneten Schwenkhebelfeder dann wieder in die Schwenkhebel-Arretierposition zurückgedrängt werden. Wenn der Elektromagnet 78 nicht mehr bestromt wird, kann das Arretieraktuatorglied 76" sich aufgrund der Arretieraktuatorfeder 94" wieder in die Arretierstellung AS zurückbewegen.

Wenn das Betätigungsglied 46" ausgehend aus der Schließstellung SS wieder in die Offenstellung OS bewegt wird, wird der Betätigungsgliedhebel 90" an der Rückenkontur des ersten Schwenkhebelarms 104 ausgelenkt, und zwar gegen die Kraft der Betätigungsgliedhebelfeder 96, bis die Rastnase 92" des Betätigungsgliedhebels 90" wieder die Arretierkontur 108 hintergreift, um wieder die in Fig. 3 in durchgezogenen Linien gezeigte Offenstellung OS des Betätigungsgliedes 46" und Arretierstellung AS der Arretiereinrichtung 70" zu realisieren.

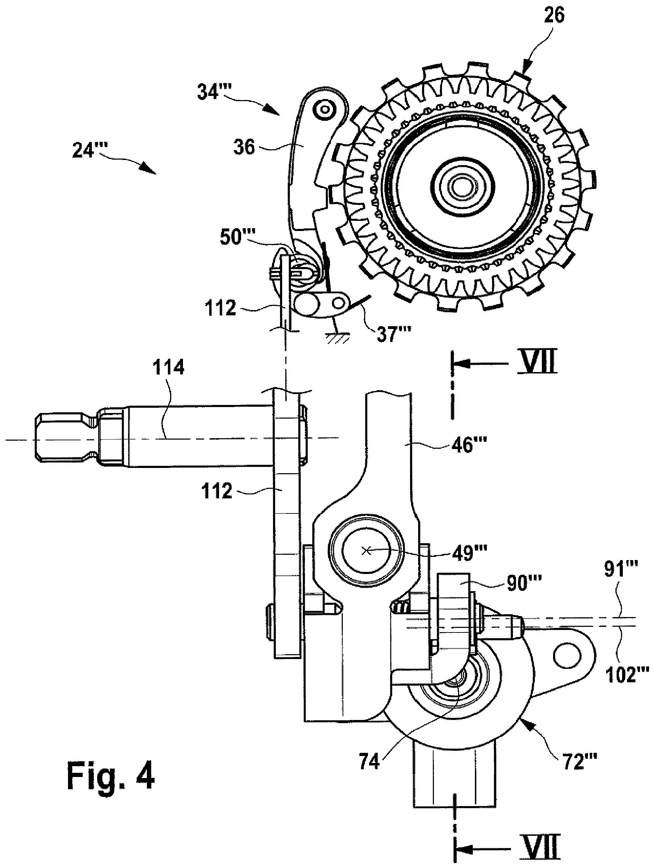

In den Figuren 4 bis 9 ist eine weitere Ausführungsform einer erfindungsgemäßen Parksperrenanordnung 24''' gezeigt, die hinsichtlich Aufbau und Funktionsweise generell der Parksperrenanordnung 24" der Fig. 3 entspricht. Gleiche Elemente sind daher durch gleiche Bezugszeichen gekennzeichnet. Im Folgenden werden im Wesentlichen die Unterschiede erläutert.

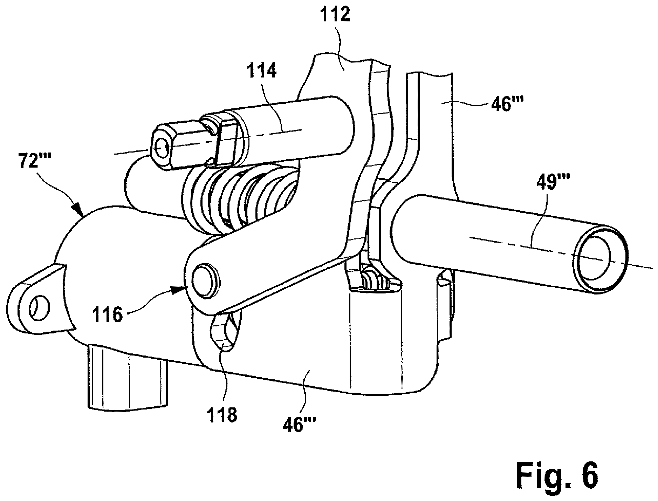

Wie es in Fig. 4 gezeigt ist, ist das Betätigungsglied 46''' der Parksperrenanordnung 24''' über einen zweiarmigen Betätigungshebel 112 mit dem Parksperrenmechanismus 34''' gekoppelt. Der Betätigungshebel 112 ist um eine Betätigungshebelachse 114 verschwenkbar, die windschief zu der Betätigungsachse 49"' ausgerichtet ist. Das Betätigungsglied 46''' steht über eine Gelenkkopplung 116 mit dem Betätigungshebel 112 in Eingriff, wie es am besten in Fig. 6 zu erkennen ist. Zu diesem Zweck weist das Betätigungsglied 46 ein Langloch 118 auf, in das ein nicht näher bezeichneter Stift ragt, der mit dem einen Arm des Betätigungshebels 112 verbunden ist. Der andere Arm des Betätigungshebels 112 ist, wie es in Fig. 4 gezeigt ist, gelenkig mit einem Ziehkeil 50''' verbunden, der in einer Parksperrenstellung zwischen einen Gehäuseabschnitt und eine Rückenseite der Parksperrenklinke 36 gezogen wird, und zwar mittels des Betätigungshebels 112. Die Parksperrenklinke 36 ist mittels einer Klinkenfeder 37''' in die Freigabestellung vorgespannt, wobei die Klinkenfeder 37''' an einem gehäusefesten Stift gelagert ist und als Schenkelfeder ausgebildet ist.

Das Betätigungsglied 46''' beinhaltet einen sich entlang der Betätigungsachse 49''' erstreckenden zylindrischen Körper, an dem die Betätigungsfeder 58''' gelagert ist. Ferner weist das Betätigungsglied 46''' einen Blechabschnitt auf, der sich quer zu der Betätigungsachse 49''' erstreckt, sowie einen Abschnitt, der sich parallel hierzu erstreckt und an dem das Langloch 118 ausgebildet ist (siehe Fig. 6).

Der Betätigungsgliedhebel 90''' ist an einem weiteren Blechabschnitt des Betätigungsgliedes 46''' drehbar um die Betätigungsgliedhebelachse 91''' gelagert, wobei der weitere Abschnitt des Betätigungsgliedes 46''' sich parallel zu der Betätigungsachse 49''' erstreckt.

Der Schwenkhebel 100 ist um eine gehäusefeste Schwenkhebelachse 102''' verschwenkbar.

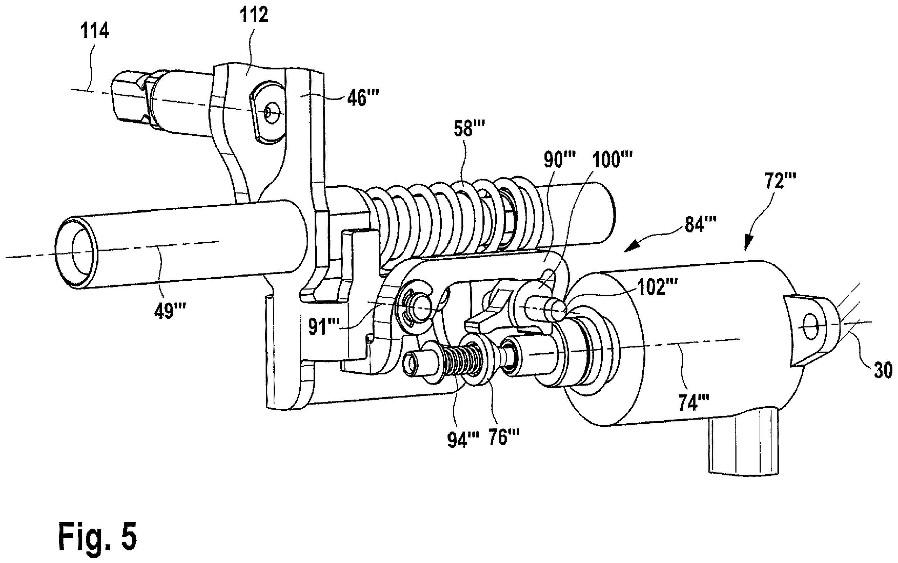

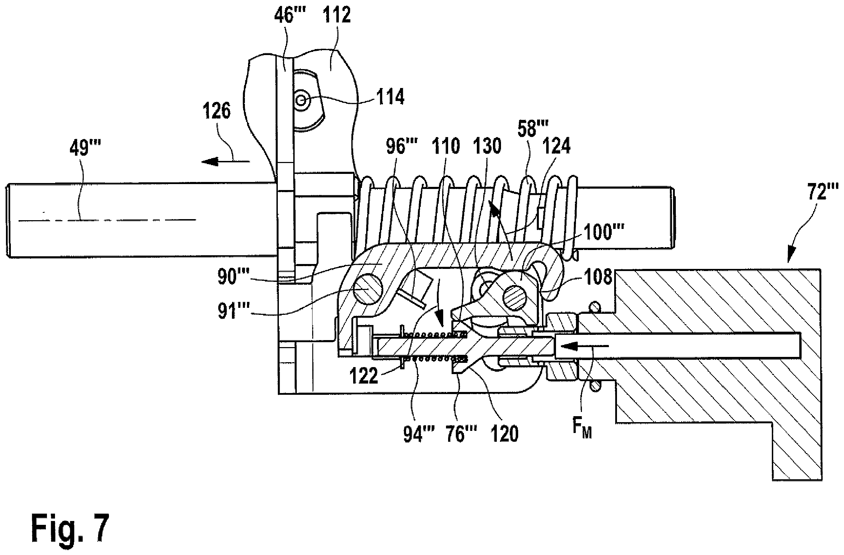

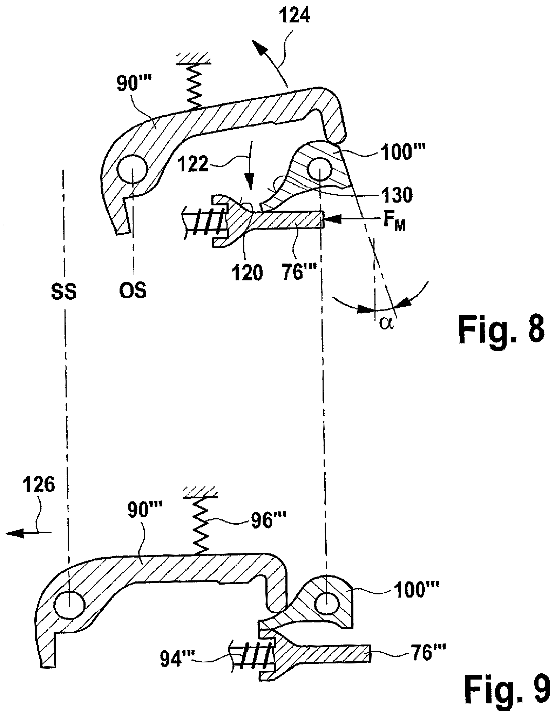

Wie es am besten in Fig. 5 und in 7 zu erkennen ist, weist das Arretieraktuatorglied 76''' eine Rampenkontur 120 auf, entlang der die Haltekontur 110 sich bewegt, wenn der Schwenkhebel 100''' verschwenkt wird, wie es in Fig. 8 zu sehen ist. Sobald aus der Stellung der Fig. 8 der Arretieraktuator 72''' nicht mehr bestromt wird, wird das Arretieraktuatorglied 76''' mittels der Arretieraktuatorfeder 94''' in die in Fig. 7 dargestellte Arretierposition zurückbewegt, wie es insbesondere in Fig. 9 gezeigt ist. Denn hierbei wird aufgrund der Rampenkontur 120 der Schwenkhebel 100''' in die in Fig. 7 und Fig. 9 gezeigte Position zurückbewegt, bis die Haltekontur 110 wieder auf einem Gegenlagerabschnitt des Arretieraktuatorgliedes 76''' aufliegt.

Der Ablauf zum Versetzen des Parksperrenmechanismus 34 in die Parksperrenstellung PS ergibt sich aus den Figuren 8 und 9. Zunächst wird ausgehend aus der in Fig. 7 dargestellten Stellung, bei der sich der Parksperrenmechanismus 34 in der Freigabestellung FS befindet und bei der sich der Arretieraktuator 72''' in der Arretierstellung befindet, der Arretieraktuator 72''' bestromt. Hierdurch wird das Arretieraktuatorglied 76''' aufgrund der Aktuatorkraft F_{M} nach links versetzt, wie es in Fig. 8 dargestellt ist. Hierdurch wird der Schwenkhebel 100''' verschwenkt, wie es in Fig. 8 bei 122 gezeigt ist, und zwar aufgrund des Eingriffs des Betätigungsgliedhebels 90 an der Arretierkontur 108. Durch das Verschwenken des Schwenkhebel 100''' kann sich der Betätigungsgliedhebel 90''' nach oben bewegen, wobei seine Rastnase 92''' entlang der Arretierkontur 108 läuft. Die vollständig ausgelenkte Position des Betätigungsgliedhebels 90''' ist in Fig. 8 dargestellt. Da der Betätigungsgliedhebel 90''' nun nicht mehr von dem Schwenkhebel 100''' in Richtung der Betätigungsachse 49''' gehalten wird, bewegt sich das Betätigungsglied 46''' aufgrund der Feder 58''' entlang der Betätigungsachse 49''' in Richtung der Schließstellung SS, wie es in Fig. 9 bei 126 gezeigt ist.

Die Rückseite des ersten Schwenkhebelarms ist dabei mit einer Keilkontur 130 ausgebildet. Bei einer Zurückbewegung des Betätigungsgliedes 46''' in die Offenstellung OS (aus der in Fig. 9 gezeigten Position in die in Fig. 8 gezeigte Position) gleitet die Rastnase des Betätigungsgliedhebels 90"' entlang dieser Keilkontur 130, so dass der Betätigungsgliedhebel 90''' wiederum in Richtung 124 ausgelenkt wird, bis die Rastnase wieder die Arretierkontur 108 hintergreift, wie es wieder in Fig. 7 zu sehen ist.

Bei der Darstellung der Kräfte in Fig. 3, die in gleicher Weise auf die Parksperrenanordnung 24''' der Figuren 4 bis 9 anwendbar ist, ist die zur Erzielung einer Gleichgewichtslage des Schwenkhebels 100 eingerichtete Kraft F2 sehr viel kleiner als die von der Betätigungsfeder 58 ausgeübte Kraft F1. Dies ergibt sich bereits aufgrund der unterschiedlichen Hebellängen L1 bzw. L2. Ferner ist die von dem Arretieraktuator 72 aufzubringende Kraft zum Bewegen des Arretieraktuatorgliedes 76 in die Lösestellung sehr viel kleiner als die Kraft F2, denn zwischen der Haltekontur 110 und dem Arretieraktuatorglied 76 wirkt eine Reibkraft, die hierbei zu überwinden ist. Es gilt näherungsweise F_{M} = 2 x µ x F2, also ein Wert, der sehr viel kleiner ist als F2. Das "µ" stellt den Reibungskoeffizienten dar. Die Näherungsformel ist insbesondere dann anwendbar, wenn an allen Lagerstellen des Arretieraktuatorgliedes die gleichen Reibkoeffizienten µ angesetzt werden können, die vorzugsweise sehr viel kleiner sind als 1.

## Patentansprüche

1. Parksperrenanordnung (24"; 24"') für ein Kraftfahrzeuggetriebe (16), mit
- einem Parksperrenmechanismus (34, 34'''), der zwischen einer Parksperrenstellung (PS) zum Immobilisieren eines Kraftfahrzeuges und einer Freigabestellung (FS) bewegbar ist,
- einer Betätigungseinrichtung (44), die dazu ausgebildet ist, mittels eines Betätigungsgliedes (46"; 46''') den Parksperrenmechanismus (34, 34''') von der Parksperrenstellung (PS) in die Freigabestellung (FS) und/oder von der Freigabestellung (FS) in die Parksperrenstellung (PS) zu bewegen, wobei das Betätigungsglied (46"; 46''') zwischen einer Schließstellung (SS) und einer Offenstellung (OS) bewegbar ist, und
- einer Arretiereinrichtung zum Arretieren des Betätigungsgliedes (46"; 48'''), wobei die Arretiereinrichtung einen Arretieraktuator (72"; 72''') aufweist, der in einer Arretierstellung (AS) so mit dem Betätigungsglied (46"; 46''') gekoppelt ist, dass das Betätigungsglied (46"; 46''') in einer eingenommenen Stellung (OS) arretiert ist,
wobei der Arretieraktuator (72"; 72''') über eine Hebelanordnung (84", 84''') mit dem Betätigungsglied (46"; 46''') gekoppelt ist, die einen verschwenkbaren Schwenkhebel (100) aufweist, derart, dass der Arretieraktuator (72"; 72''') über eine erste Hebellänge (L1) auf die Hebelanordnung (84"; 84''') wirkt, wobei das Betätigungsglied (46"; 46''') über eine zweite Hebellänge (L2) auf die Hebelanordnung (84"; 84''') wirkt, und wobei die erste Hebellänge (L1) größer ist als die zweite Hebellänge (L2),
**dadurch gekennzeichnet, dass** die Hebelanordnung (84"; 84''') ferner einen Betätigungsgliedhebel (90"; 90''') aufweist, der zwischen einer ersten Betätigungsgliedhebel-Position und einer zweiten Betätigungsgliedhebel-Position verschwenkbar an dem Betätigungsglied gelagert ist, wobei der Betätigungsgliedhebei (90"; 90"') in der ersten Betätigungsgliedhebel-Position an dem Schwenkhebel (100) angreift.

2. Parksperrenanordnung nach Anspruch 1, **dadurch gekennzeichnet, dass** die Arretiereinrichtung (70"; 72''') so ausgebildet ist, dass das Betätigungsglied (46"; 46''') ohne Energiezufuhr in der eingenommenen Stellung (OS) arretiert ist.

3. Parksperrenanordnung nach Anspruch 1 oder 2, **dadurch gekennzeichnet, dass** der Schwenkhebel (100) ein zweiarmiger Hebel ist, wobei der Arretieraktuator (72"; 72''') mit einem ersten Schwenkhebelarm (104) gekoppelt ist und wobei das Betätigungsglied (46"; 46"') mit einem zweiten Schwenkhebelarms (106) gekoppelt ist.

4. Parksperrenanordnung nach einem der Ansprüche 1 - 3, **dadurch gekennzeichnet, dass** der Schwenkhebel (100) wenigstens eine Funktionskontur (108, 110) aufweist, an der der Arretieraktuator (72"; 72''') und/oder das Betätigungsglied (46"; 46''') angreift.

5. Parksperrenanordnung nach einem der Ansprüche 1 - 4, **dadurch gekennzeichnet, dass** der Schwenkhebel (100) zwischen einer Schwenkhebel-Arretierposition und einer Schwenkhebel-Freigabeposition verschwenkbar ist, wobei der Schwenkhebel (100) für das Betätigungsglied (72"; 72''') eine Arretierkontur (108) aufweist, die in der Schwenkhebel-Arretierposition so ausgerichtet ist, dass das Betätigungsglied (72"; 72''') in der eingenommenen Stellung (OS) an der Arretierkontur (108) formschlüssig gehalten ist.

6. Parksperrenanordnung nach einem der Ansprüche 1 - 5, **dadurch gekennzeichnet, dass** der Schwenkhebel (100) zwischen einer Schwenkhebel-Arretierposition und einer Schwenkhebel-Freigabeposition verschwenkbar ist, wobei der Schwenkhebel (100) für den Arretieraktuator (72"; 72"') eine Haltekontur (110) aufweist, die in der Schwenkhebel-Arretierposition so ausgerichtet ist, dass der Arretieraktuator (72"; 72''') den Schwenkhebel (100) gegenüber einer Verdrehung in die Schwenkhebel-Freigabeposition formschlüssig halten kann.

7. Parksperrenanordnung nach einem der Ansprüche 1 - 6, **dadurch gekennzeichnet, dass** der Arretieraktuator (72"; 72''') eine Arretieraktuatorachse (74"; 74''') aufweist, die unter einem Winkel kleiner als 90° in Bezug auf eine Betätigungsachse (49"; 49''') ausgerichtet ist, entlang der das Betätigungsglied (46"; 46''') zwischen der Schließstellung (SS) und der Offenstellung (OS) bewegbar ist.

8. Parksperrenanordnung nach einem der Ansprüche 1 - 7, **dadurch gekennzeichnet, dass** das Betätigungsglied (46"; 46''') mittels eines hydraulischen Parksperrenaktuators (54) bewegbar ist und/oder dass der Arretieraktuator (72"; 72''') ein elektromagnetischer Aktuator ist.

## Claims

1. Parking lock arrangement (24"; 24''') for a motor vehicle transmission (16), having
- a parking lock mechanism (34, 34''') which is movable between a parking lock position (PS) for immobilizing a motor vehicle and a release position (FS),
- an actuation device (44) which is designed to move the parking lock mechanism (34, 34''') from the parking lock position (PS) into the release position (FS) and/or from the release position (FS) into the parking lock position (PS) by means of an actuation element (46"; 46'''), wherein the actuation element (46"; 46''') is movable between a closed position (SS) and an open position (OS), and
- an arresting device for arresting the actuation element (46"; 46'''), wherein the arresting device has an arresting actuator (72"; 72''') which, in an arresting position (AS), is coupled to the actuation element (46"; 46''') such that the actuation element (46"; 46''') is arrested in an assumed position (OS),
wherein the arresting actuator (72"; 72''') is coupled to the actuation element (46"; 46''') by means of a lever arrangement (84", 84''') which has a pivotable pivot lever (100), in such a way that the arresting actuator (72"; 72''') acts on the lever arrangement (84", 84''') via a first lever length (L1), wherein the actuation element (46"; 46''') acts on the lever arrangement (84", 84''') via a second lever length (L2), and wherein the first lever length (L1) is greater than the second lever length (L2),
**characterized in that** the lever arrangement (84", 84''') furthermore has an actuation element lever (90"; 90''') which is mounted on the actuation element so as to be pivotable between a first actuation element lever position and a second actuation element lever position, wherein the actuation element lever (90"; 90'''), in the first actuation element lever position, engages on the pivot lever (100).

2. Parking lock arrangement according to Claim 1, **characterized in that** the arresting device (70"; 72''') is designed such that the actuation element (46"; 46''') is arrested in the assumed position (OS) without a feed of energy.

3. Parking lock arrangement according to Claim 1 or 2, **characterized in that** the pivot lever (100) is a two-armed lever, wherein the arresting actuator (72"; 72''') is coupled to a first pivot lever arm (104) and wherein the actuation element (46"; 46"') is coupled to a second pivot lever arm (106).

4. Parking lock arrangement according to one of Claims 1 - 3, **characterized in that** the pivot lever (100) has at least one functional contour (108, 110) on which the arresting actuator (72"; 72''') and/or the actuation element (46"; 46''') engages.

5. Parking lock arrangement according to one of Claims 1 - 4, **characterized in that** the pivot lever (100) is pivotable between a pivot lever arresting position and a pivot lever release position, wherein the pivot lever (100) has, for the actuation element (72"; 72'''), an arresting contour (108) which, in the pivot lever arresting position, is oriented such that the actuation element (72"; 72''') is held in positively locking fashion in the assumed position (OS) on the arresting contour (108).

6. Parking lock arrangement according to one of Claims 1 - 5, **characterized in that** the pivot lever (100) is pivotable between a pivot lever arresting position and a pivot lever release position, wherein the pivot lever (100) has, for the arresting actuator (72"; 72'''), a holding contour (110) which, in the pivot lever arresting position, is oriented such that the arresting actuator (72"; 72''') can hold the pivot lever (100) in positively locking fashion with respect to a rotation into the pivot lever release position.

7. Parking lock arrangement according to one of Claims 1 - 6, **characterized in that** the arresting actuator (72"; 72''') has an arresting actuator axis (74"; 14''') which is oriented at an angle of less than 90° in relation to an actuation axis (49"; 49''') along which the actuation element (46"; 46''') is movable between the closed position (SS) and the open position (OS).

8. Parking lock arrangement according to one of Claims 1 - 7, **characterized in that** the actuation element (46"; 46''') is movable by means of a hydraulic parking lock actuator (54), and/or **in that** the arresting actuator (72"; 72''') is an electromagnetic actuator.

## Revendications

1. Ensemble de verrouillage de stationnement (24" ; 24''') pour une boîte de vitesses de véhicule (16), avec :
- un mécanisme de verrouillage de stationnement (34, 34''') pouvant être déplacé entre une position de verrouillage de stationnement (PS) servant à immobiliser un véhicule automobile et une position de libération (FS) ;
- un dispositif d'actionnement (44) réalisé pour déplacer, à l'aide d'un élément d'actionnement (46" ; 46'''), le mécanisme de verrouillage de stationnement (34, 34''') de la position de verrouillage de stationnement (PS) dans la position de libération (FS) et/ou de la position de libération (FS) dans la position de verrouillage de stationnement (PS), l'élément d'actionnement (46" ; 46''') pouvant être déplacé entre une position de fermeture (SS) et une position d'ouverture (OS) ; et
- un dispositif d'arrêt servant à l'arrêt de l'élément d'actionnement (46" ; 46'''), le dispositif d'arrêt comportant un actionneur d'arrêt (72" ; 72''') couplé de telle sorte avec l'élément d'actionnement (46" ; 46''') dans une position d'arrêt (AS) que l'élément d'actionnement (46" ; 46''') est arrêté dans une position adoptée (OS) ;
l'actionneur d'arrêt (72" ; 72''') étant couplé de telle sorte à l'élément d'actionnement (46" ; 46''') comportant un levier basculant (100) pouvant pivoter, via un agencement à levier (84", 84'''), que l'actionneur d'arrêt (72" ; 72"') agisse, via une première longueur de levier (L1), sur l'agencement à levier (84" ; 84'''), l'élément d'actionnement (46" ; 46''') agissant, via une deuxième longueur de levier (L2), sur l'agencement à levier (84" ; 84''') et la première longueur de levier (L1) étant supérieure à la deuxième longueur de levier (L2) ;
**caractérisé en ce que** l'agencement à levier (84" ; 84''') comporte en outre un levier d'élément d'actionnement (90" ; 90''') disposé au niveau de l'élément d'actionnement de façon à pouvoir pivoter entre une première position de levier d'élément d'actionnement et une deuxième position de levier d'élément d'actionnement, le levier d'élément d'actionnement (90" ; 90''') s'accrochant au levier basculant (100) dans la première position de levier d'élément d'actionnement.

2. Ensemble de verrouillage de stationnement selon la revendication 1, **caractérisé en ce que** le dispositif d'arrêt (70" ; 72''') est réalisé de telle sorte que sans alimentation en énergie, l'élément d'actionnement (46" ; 46''') est arrêté dans la position adoptée (OS).

3. Ensemble de verrouillage de stationnement selon la revendication 1 ou 2, **caractérisé en ce que** le levier basculant (100) est un levier à deux bras, l'actionneur d'arrêt (72" ; 72''') étant couplé à un premier bras de levier basculant (104) et l'élément d'actionnement (46" ; 46''') étant couplé à un deuxième bras de levier basculant (106).

4. Ensemble de verrouillage de stationnement selon l'une quelconque des revendications 1 à 3, **caractérisé en ce que** le levier basculant (100) comporte au moins un contour fonctionnel (108, 110) au niveau duquel l'actionneur d'arrêt (72" ; 72''') et/ou l'élément d'actionnement (46" ; 46''') s'accroche.

5. Ensemble de verrouillage de stationnement selon l'une quelconque des revendications 1 à 4, **caractérisé en ce que** le levier basculant (100) peut être pivoté entre une position d'arrêt de levier basculant et une position de libération de levier basculant, le levier basculant (100) prévu pour l'élément d'actionnement (72" ; 72''') comportant un contour d'arrêt (108) orienté de telle sorte dans la position d'arrêt de levier basculant que l'élément d'actionnement (72" ; 72''') est maintenu par complémentarité de formes contre le contour d'arrêt (108) dans la position adoptée (OS).

6. Ensemble de verrouillage de stationnement selon l'une quelconque des revendications 1 à 5, **caractérisé en ce que** le levier basculant (100) peut être pivoté entre une position d'arrêt de levier basculant et une position de libération de levier basculant, le levier basculant (100) prévu pour l'actionneur d'arrêt (72" ; 72"') comportant un contour de maintien (110) orienté de telle sorte dans la position d'arrêt de levier basculant que l'actionneur d'arrêt (72" ; 72''') peut maintenir le levier basculant (100) par complémentarité de formes dans la position de libération de levier basculant de façon à empêcher toute torsion.

7. Ensemble de verrouillage de stationnement selon l'une quelconque des revendications 1 à 6, **caractérisé en ce que** l'actionneur d'arrêt (72" ; 72''') comporte un axe d'actionneur d'arrêt (74" ; 74''') orienté selon un angle inférieur à 90° par rapport à un axe d'actionnement (49" ; 49"') le long duquel l'élément d'actionnement (46" ; 46''') peut être déplacé entre la position de fermeture (SS) et la position d'ouverture (OS).

8. Ensemble de verrouillage de stationnement selon l'une quelconque des revendications 1 à 7, **caractérisé en ce que** l'élément d'actionnement (46" ; 46''') peut être déplacé à l'aide d'un actionneur de blocage de stationnement (54) hydraulique et/ou que l'actionneur d'arrêt (72" ; 72''') est un actionneur électromagnétique.
